# EUROPÄISCHE PATENTSCHRIFT

(11) **EP 4 111 073 B1**
(45) Veröffentlichungstag und Bekanntmachung des Hinweises auf die Patenterteilung: **13.03.2024**
(21) Anmeldenummer: 21705099.6
(22) Anmeldetag: 29.01.2021
(51) Int. Cl.: F16F 15/129

(54) **TORSIONSSCHWINGUNGSDÄMPFER MIT REIBEINRICHTUNG**
TORSIONAL VIBRATION DAMPER COMPRISING A FRICTION DEVICE
AMORTISSEUR DE VIBRATIONS DE TORSION À DISPOSITIF DE FRICTION

(30) Priorität: 27.02.2020 DE 102020105144
(43) Veröffentlichungstag der Anmeldung: 04.01.2023
(73) Patentinhaber: Schaeffler Technologies AG & Co. KG, 91074 Herzogenaurach (DE)
(72) Erfinder: HÄSSLER, Martin, 76676 Graben-Neudorf (DE); RUSCH, Alain, 67760 Gambsheim (FR); GMEINER, Timm, 76185 Karlsruhe (DE); HARTMANN, Thorsten, 77876 Kappelrodeck (DE)
(86) Internationale Anmeldenummer: PCT/DE2021/100087
(87) Internationale Veröffentlichungsnummer: WO 2021/170171

(56) Entgegenhaltungen:
- EP-A2- 2 711 586
- DE-A1-102009 002 968
- DE-A1-102018 108 414
- DE-B4-102009 002 968

## Beschreibung

Die Erfindung betrifft einen Torsionsschwingungsdämpfer mit einer Reibeinrichtung, mit einer sich entlang einer axialen Richtung erstreckenden Drehachse. Der Torsionsschwingungsdämpfer mit Reibeinrichtung kann im Antriebsstrang eines Kraftfahrzeugs eingesetzt werden.

Reibeinrichtungen werden in Torsionsschwingungsdämpfern eingesetzt, um die Relativverdrehung zwischen einer Eingangsseite und einer Ausgangsseite gezielt mit einem Reibmoment zu beaufschlagen, um so dem schwingenden System passend Energie zu entziehen und es dadurch zu dämpfen.

Torsionsschwingungsdämpfer werden insbesondere zur Reduktion von Torsionsschwingungen in einem Antriebsstrang eingesetzt. Torsionsschwingungsdämpfer sind in einem mit periodischen Störungen angeregten Antriebsstrang gezielt eingebrachte Torsionsnachgiebigkeiten. Ziel hierbei ist, die in verschiedenen Betriebssituationen auftretenden störenden Schwingungsresonanzen in einen Drehzahlbereich möglichst unterhalb der Betriebsdrehzahlen zu verschieben. Im Betriebsdrehzahlbereich verbleibende Schwingungsresonanzen werden über eine externe oder integrierte Reibeinrichtung gedämpft, deren Reibmoment in definierten Grenzen zu liegen hat. Die Reibeinrichtung kann insbesondere unabhängig von der Torsionsnachgiebigkeit ausgeführt sein.

Es ist bekannt, als Reibeinrichtung einen axial wirkenden Energiespeicher einzusetzen, z. B. eine Wellscheibe oder eine Tellerfeder, der zusammen mit einem passenden Reibring und ggf. einer Stützscheibe axial zwischen Bauteilen angeordnet wird, die mit der Eingangsseite bzw. Ausgangsseite verbunden sind. Die Axialkraft des Energiespeichers in Einbaulage, der Reibradius des Reibelements und der Reibwert der Materialpaarung definieren ein Reibmoment, das über die Relativverdrehung im Wesentlichen konstant ist. Für verschiedene Betriebspunkte bzw. Fahrzustände, die unterschiedliche Reibmomentniveaus benötigen, werden entsprechend mehrere, auf unterschiedliche Reibmomente ausgelegte Reibeinrichtungen vorgesehen, die ihre Relativverdrehung jeweils im zugehörigen Verdrehwinkelbereich des Torsionsschwingungsdämpfers erfahren.

Aus der WO 2019/192645 A1 ist eine Kupplungsscheibe mit einem als Pendelwippendämpfer ausgebildeten Torsionsschwingungsdämpfer bekannt. Dabei sind Eingangsteil und Ausgangsteil des Pendelwippendämpfers relativ zueinander verdrehbar. Die Verdrehung erfolgt gegen die Federwirkung einer Federeinheit und wird gedämpft über eine Reibeinrichtung.

Aus der DE 10 2015 211 899 A1 ist ein Torsionsschwingungsdämpfer bekannt, bei dem eine Federeinrichtung außerhalb des Drehmomentpfads zwischen Eingangsteil und Ausgangsteil angeordnet ist.

Aus der DE 10 2014 218 498 A1 ist ein Torsionsschwingungsdämpfer bekannt. Ein Eingangselement ist mit einem ersten Reibelement und ein gegenüber dem Eingangselement relativ verdrehbares Ausgangselement ist mit einem zweiten Reibelement verbunden. Die Reibelemente kontaktieren einander in Abhängigkeit von dem Verdrehwinkel auf voneinander unterschiedlichen Kontaktdurchmessern. Bei Beaufschlagung mit einer konstanten Axialkraft aus einem Federelement resultiert aus dem veränderlichen Reibradius bzw. Kontaktdurchmesser bei Relativverdrehung ein vom Verdrehwinkel abhängiges Reibmoment.

Steht für eine Reibeinrichtung nur ein eingeschränkter radialer Einbauraum zur Verfügung, lassen sich allein durch Variation des Reibradius zwischen ein und denselben Reibpartnern nur begrenzt unterschiedliche Niveaus für das resultierende Reibmoment einstellen. In kaum einem Fall wird es möglich sein, das Reibmoment hierdurch mehr als zu verdoppeln.

Darüber hinaus ist die Lehre der Dokumente EP 2 711 586 A2, DE 10 2009 002968 A1 und DE 10 2018 108414 A1 ebenfalls als Teil des Standes der Technik zu berücksichtigen.

Hiervon ausgehend liegt der vorliegenden Erfindung die Aufgabe zugrunde, die eingangs geschilderten Probleme zumindest teilweise zu lindern. Insbesondere ist in einem kompakten Einbauraum ein Torsionsschwingungsdämpfer mit einer Reibeinrichtung mit verdrehwinkelabhängigem Reibmoment darzustellen, deren höchstes Reibmoment ein Vielfaches des niedrigsten Reibmoments betragen kann. Solche Reibeinrichtungen werden insbesondere benötigt, wenn in verschiedenen Verdrehwinkelbereichen des Torsionsschwingungsdämpfers, denen verschiedenen Betriebspunkten bzw. Fahrzuständen zugeordnet sind, deutlich unterschiedliche Reibmomentniveaus gefordert sind, um z. B. Geräuschkomfort und Lebensdauer der Antriebsstrangkomponenten gewährleisten zu können, und das Reibmoment hierfür bei Relativverdrehung zwischen ein und denselben Reibpartnern entstehen soll.

Diese Aufgabe wird gelöst durch einen Torsionsschwingungsdämpfer mit einer Reibeinrichtung gemäß den Merkmalen des unabhängigen Anspruchs 1. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Es wird ein Torsionsschwingungsdämpfer mit einer Reibeinrichtung mit einer sich entlang einer axialen Richtung erstreckenden Drehachse vorgeschlagen. Die Reibeinrichtung weist eine Eingangsseite mit einer ersten Scheibe und einer zweiten Scheibe sowie eine entlang der axialen Richtung zwischen den Scheiben angeordnete und gegenüber der Eingangsseite verdrehbare Ausgangsseite mit einer ersten Reibscheibe und einer zweiten Reibscheibe auf. Die Ausgangsseite weist ein Federelement mit einer Mehrzahl von Kontaktbereichen auf, wobei das Federelement entlang der axialen Richtung zwischen den Reibscheiben angeordnet ist und eine in der axialen Richtung zumindest zwischen den Reibscheiben wirkende Kontaktkraft über die Kontaktbereiche übertragbar ist. Die Kontaktkraft ist in Abhängigkeit von einem Verdrehwinkel zwischen Eingangsseite und Ausgangsseite zumindest über einen ersten Kontaktbereich oder einen zweiten Kontaktbereich übertragbar, die auf voneinander unterschiedlichen Durchmessern angeordnet sind und die gleiche Reibscheibe kontaktieren.

Der Torsionsschwingungsdämpfer mit Reibeinrichtung kann insbesondere im Antriebsstrang eines Kraftfahrzeugs eingesetzt werden.

Insbesondere werden über die Eingangsseite oder die Ausgangsseite Schwingungen in die Reibeinrichtung eingeleitet und über die jeweils andere von Eingangsseite und Ausgangsseite (gedämpft) weitergeleitet.

Das Federelement ist insbesondere eine scheibenförmige Tellerfeder.

Der mögliche Verdrehwinkel zwischen Eingangsseite und Ausgangsseite beträgt insbesondere zwischen null und 180 Winkelgrad, bevorzugt zwischen null und 120 Winkelgrad, besonders bevorzugt zwischen null und 90 Winkelgrad.

Die erste Reibscheibe kontaktiert das Federelement insbesondere entweder über einen ersten Kontaktbereich oder einen zweiten Kontaktbereich. Die zweite Reibscheibe kontaktiert das Federelement insbesondere über einen dritten Kontaktbereich.

Die vorgeschlagene Reibeinrichtung ermöglicht insbesondere, dass die in der axialen Richtung wirkende Kraft - und damit das Reibmoment - sich dadurch verändert, dass abhängig vom Verdrehwinkel zwischen der Eingangsseite und der Ausgangsseite unterschiedliche Durchmesser des Federelements über mindestens eine Reibscheibe kontaktiert werden. Liegen dabei die Kontaktbereiche der unterschiedlichen Reibscheiben, also z. B. der erste Kontaktbereich und der dritte Kontaktbereich, in der radialen Richtung weit voneinander beabstandet vor, wird eine vergleichsweise niedrige Axialkraft durch das Federelement übertragen. Liegen die Kontaktbereiche der unterschiedlichen Reibscheiben, also z. B. der zweite Kontaktbereich und der dritte Kontaktbereich, in der radialen Richtung nah beieinander, wird eine vergleichsweise hohe Axialkraft durch das Federelement übertragen. Im Gegensatz zum Prinzip einer Variation eines Reibradius, z. B. aus der DE 10 2014 218 498 A1 bekannt, kann durch das hier vorgeschlagene Prinzip einer modulierten Axialkraft verdrehwinkelabhängig ein höchstes Reibmoment erzeugt werden, dass ein Vielfaches des niedrigsten Reibmoments beträgt.

Insbesondere können durch beide Reibscheiben unterschiedliche Kontaktbereiche realisiert werden. Bevorzugt kann zumindest eine der Reibscheiben auch mehr als zwei unterschiedliche Kontaktbereiche aufweisen. Insbesondere können so eine Vielzahl an Kombinationen von Kontaktbereichen unterschiedlicher Reibscheiben miteinander realisiert werden, so dass das Reibmoment zahlreiche verschiedene Werte aufweisen kann.

Für eine bespielhafte Reibrichtung kann z. B. der erste Kontaktbereich zwischen Federelement und erster Reibscheibe auf einem ersten Durchmesser von z. B. 40 Millimeter liegen, während der zweite Kontaktbereich zwischen Federelement und erster Reibscheibe auf einem zweiten Durchmesser von z. B. 56 Millimeter angeordnet ist. Ein dritter Kontaktbereich zwischen Federelement und zweiter Reibscheibe liegt dabei z. B. auf einem dritten Durchmesser von 60 Millimeter.

Insbesondere beträgt der zweite Durchmesser zwischen 99 und 90 % des dritten Durchmessers, während der erste Durchmesser zwischen 80 % und 60 %, bevorzugt zwischen 70 % und 60 % des dritten Durchmessers beträgt.

Insbesondere sind der erste und der zweite Durchmesser kleiner als der dritte Durchmesser ausgeführt.

Insbesondere weist zumindest die erste Scheibe eine Mehrzahl von in die axiale Richtung weisenden ersten Kontaktzonen zur Kontaktierung mindestens einer in der axialen Richtung gegenüberliegenden ersten Reibzone der ersten Reibscheibe auf, wobei die ersten Kontaktzonen entlang einer Umfangsrichtung voneinander beabstandet angeordnet sind.

Insbesondere ist die mindestens eine erste Reibzone entlang der Umfangsrichtung in voneinander unterschiedlichen Durchmesserbereichen angeordnet. Insbesondere wird die erste Reibzone durch Erhöhungen auf der ersten Reibscheibe gebildet, die sich von einer sonst eben ausgeführten Oberfläche in der axialen Richtung erstrecken. Insbesondere ist die erste Reibzone entlang der Umfangsrichtung kontinuierlich ausgeführt und erstreckt sich dabei mäanderförmig über unterschiedliche Durchmesserbereiche. Insbesondere erstreckt sich die erste Reibzone über bestimmte Winkelbereiche nur in einem ersten Durchmesserbereich und über bestimmte andere Winkelbereiche nur in einem zweiten Durchmesserbereich.

Insbesondere weist die erste Reibscheibe zur Kontaktierung des ersten Kontaktbereichs des Federelements mindestens ein erstes inneres Kontaktelement und zur Kontaktierung des zweiten Kontaktbereichs mindestens ein erstes äußeres Kontaktelement auf.

Ein Kontaktelement kann z. B. durch eine Erhebung auf der ersten Reibscheibe gebildet sein, dass sich von einer sonst eben ausgeführten Oberfläche in der axialen Richtung erstreckt. Insbesondere erstreckt sich das erste und/oder zweite Kontaktelement in der Umfangsrichtung nur über einen begrenzten Winkelbereich. Insbesondere ist diese Erhebung entlang der Umfangsrichtung mit einer konstanten Höhe ausgeführt. Insbesondere ist die Erhebung entlang der radialen Richtung kuppenförmig ausgebildet, weist also einen kurvenförmigen Verlauf auf.

Insbesondere sind erste äußere und/oder erste innere Kontaktelemente in einer festgelegten relativen Lage zur ersten Reibzone angeordnet.

Insbesondere weist die erste Reibscheibe zumindest eine Mehrzahl von ersten inneren Kontaktelementen auf, die entlang der Umfangsrichtung voneinander beabstandet angeordnet sind.

Insbesondere ist jedes erste innere Kontaktelement entlang der axialen Richtung zumindest teilweise fluchtend zur mindestens einen ersten Reibzone angeordnet.

Insbesondere weist die zweite Scheibe eine entlang einer Umfangsrichtung umlaufend ausgeführte und in die axiale Richtung weisende zweite Kontaktzone zur Kontaktierung einer in der axialen Richtung gegenüberliegenden zweiten Reibzone der zweiten Reibscheibe auf.

Insbesondere weist die zweite Reibscheibe zur Kontaktierung eines dritten Kontaktbereichs des Federelements ein in einer Umfangsrichtung umlaufend ausgeführtes zweites Kontaktelement auf.

Insbesondere ist das mindestens eine zweite Kontaktelement auf einem größten Durchmesser angeordnet, über den die Kontaktkraft in der Reibeinrichtung übertragbar ist.

Insbesondere ist das Federelement gegenüber einer Umfangsrichtung formschlüssig mit jeder Reibscheibe verbunden. Insbesondere weist das Federelement in der radialen Richtung sich nach außen erstreckende erste Zungen auf, die mit ersten Ausnehmungen der zweiten Reibscheibe gegenüber der Umfangsrichtung formschlüssig zusammenwirken. Insbesondere weist das Federelement in der radialen Richtung sich nach innen erstreckende zweite Zungen auf, die mit zweiten Ausnehmungen der ersten Reibscheibe gegenüber der Umfangsrichtung formschlüssig zusammenwirken.

Insbesondere wirken die zweiten Zungen auch mit einer Nabe gegenüber der Umfangsrichtung formschlüssig zusammen, so dass die Reibeinrichtung über die zweiten Zungen mit einer Nabe drehfest verbindbar ist.

Insbesondere weist das als Tellerfeder ausgeführte Federelement im Kraftrand der Tellerfeder ein Verhältnis zwischen ungespannter Höhe und Materialdicke der Tellerfeder auf, für das gilt: 1,25 < Höhe/Materialdicke < 1,55.

Insbesondere sind die Reibscheiben aus einem faserverstärkten Polymerwerkstoff ausgeführt.

Der Torsionsschwingungsdämpfer mit Reibeinrichtung kann z. B. mit einer Kupplungsscheibe verbunden sein. Die Kupplungsscheibe ist insbesondere Teil einer Reibungskupplung, die zumindest eine Gegenplatte und eine entlang der axialen Richtung verlagerbare Anpressplatte aufweist. Die Kupplungsscheibe, bzw. der Reibbelag der Kupplungsscheibe, ist zwischen Gegenplatte und Anpressplatte angeordnet. Die Reibungskupplung wird insbesondere in einem Antriebsstrang eines Kraftfahrzeuges eingesetzt.

Der Torsionsschwingungsdämpfer wird insbesondere zur Reduktion von Torsionsschwingungen in einem Antriebsstrang eingesetzt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Reibeinrichtung in einer perspektivischen Ansicht, zumindest teilweise im Schnitt;
- Fig. 2:: die Reibeinrichtung nach Fig. 1 in einer ersten Explosionsdarstellung, in perspektivischer Ansicht;
- Fig. 3:: die Reibeinrichtung nach Fig. 1 und 2 in einer zweiten Explosionsdarstellung, in perspektivischer Ansicht;
- Fig. 4:: eine erste Reibscheibe der Reibeinrichtung nach Fig. 1 bis 3, in einer ersten perspektivischen Ansicht;
- Fig. 5:: die erste Reibscheibe nach Fig. 4, in einer zweiten perspektivischen Ansicht;
- Fig. 6:: die Reibeinrichtung nach Fig. 1 bis 3 in einer Seitenansicht im Schnitt, in einem ersten Zustand;
- Fig. 7:: die Reibeinrichtung nach Fig. 6 in einer weiteren Seitenansicht im Schnitt;
- Fig. 8:: die Reibeinrichtung nach Fig. 1 bis 3 in einer Seitenansicht im Schnitt, in einem zweiten Zustand;
- Fig. 9:: die Reibeinrichtung nach Fig. 8 in einer weiteren Seitenansicht im Schnitt.

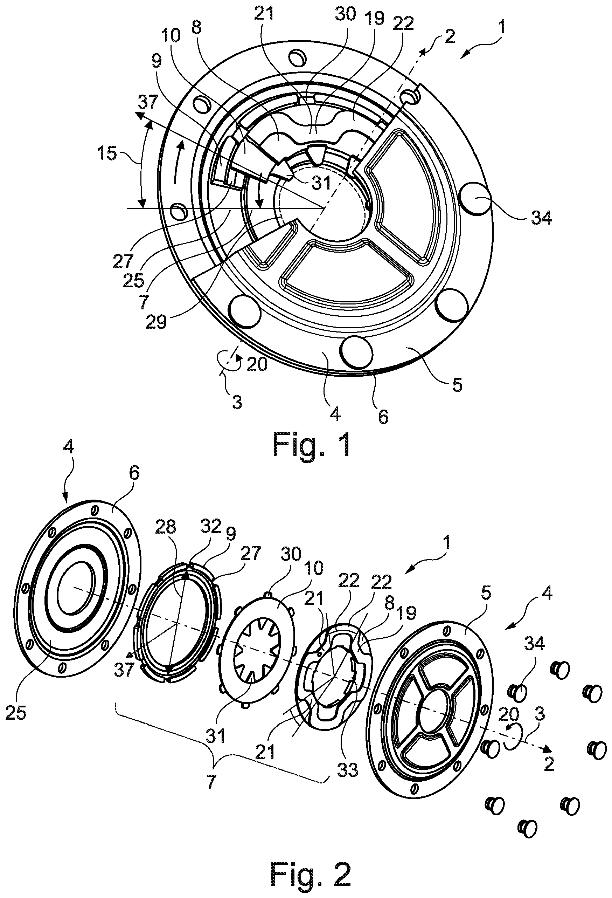

Die Fig. 1 bis 9 werden im Folgenden gemeinsam beschrieben.

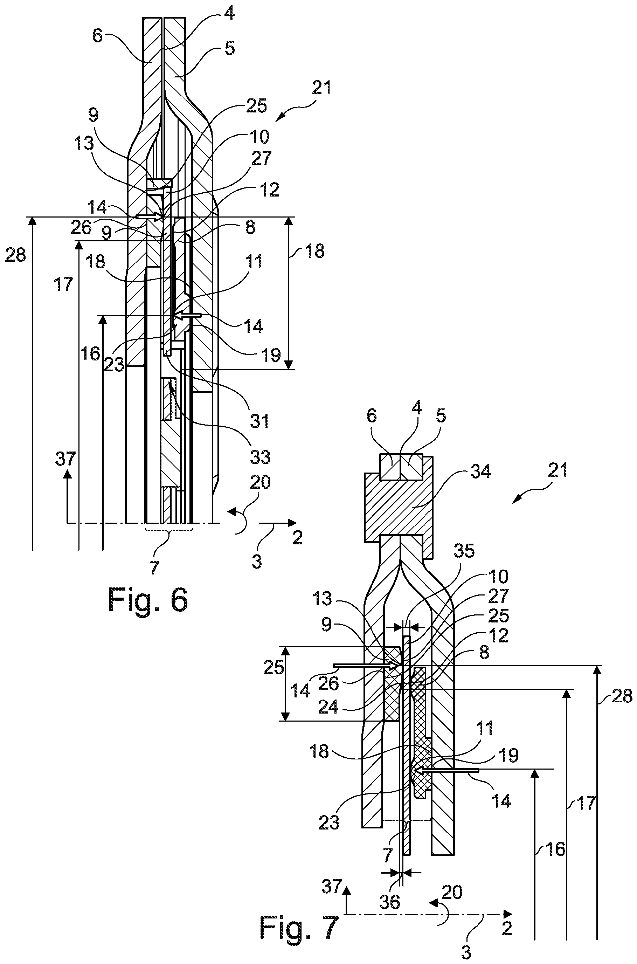

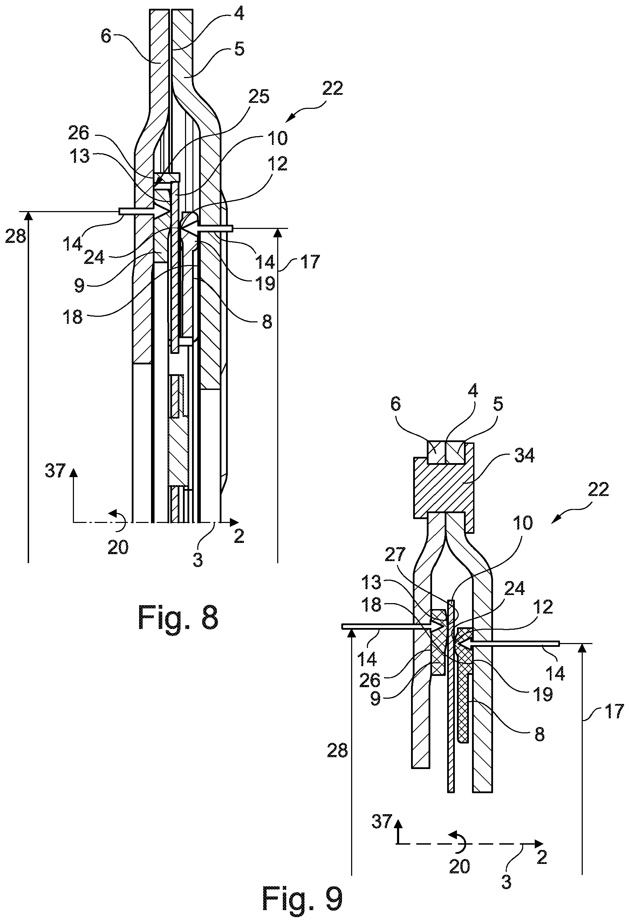

Ein Torsionsschwingungsdämpfer mit einer Reibeinrichtung 1 umfasst eine sich entlang einer axialen Richtung 2 erstreckende Drehachse 3. Die Reibeinrichtung 1 weist eine Eingangsseite 4 mit einer ersten Scheibe 5 und einer zweiten Scheibe 6 sowie eine entlang der axialen Richtung 2 zwischen den Scheiben 5, 6 angeordnete und gegenüber der Eingangsseite 4 verdrehbare Ausgangsseite 7 mit einer ersten Reibscheibe 8 und einer zweiten Reibscheibe 9 auf. Die Ausgangsseite 7 weist ein Federelement 10 in Form einer Tellerfeder mit einer Mehrzahl von Kontaktbereichen 11, 12, 13 auf, wobei das Federelement 10 entlang der axialen Richtung 2 zwischen den Reibscheiben 8, 9 angeordnet ist und eine in der axialen Richtung 2 zumindest zwischen den Reibscheiben 8, 9 wirkende Kontaktkraft 14 (siehe Fig. 6 bis 9) über die Kontaktbereiche 11, 12, 13 übertragbar ist. Die Kontaktkraft 14 ist in Abhängigkeit von einem Verdrehwinkel 15 (siehe Fig. 1) zwischen Eingangsseite 4 und Ausgangsseite 7 über einen ersten Kontaktbereich 11 (siehe erster Zustand der Reibeinrichtung 1 in Fig. 6 und 7) oder einen zweiten Kontaktbereich 12 (siehe zweiter Zustand der Reibeinrichtung 1 in Fig. 8 und 9) übertragbar, die auf voneinander unterschiedlichen Durchmessern 16, 17 angeordnet sind und die gleiche erste Reibscheibe 8 kontaktieren.

Die Scheiben 5, 6 der Eingangsseite 4 sind über als Niete ausgeführte Verbindungselemente 34 miteinander verbunden.

Die erste Reibscheibe 8 kontaktiert das Federelement 10 entweder über einen ersten Kontaktbereich 11 oder einen zweiten Kontaktbereich 12. Die zweite Reibscheibe 9 kontaktiert das Federelement 10 über einen dritten Kontaktbereich 13.

Die vorgeschlagene Reibeinrichtung 1 ermöglicht, dass die in der axialen Richtung 2 wirkende Kraft - und damit das Reibmoment - sich dadurch verändert, dass abhängig vom Verdrehwinkel 15 zwischen der Eingangsseite 4 und der Ausgangsseite 7 unterschiedliche Durchmesser 16, 17 des Federelements 10 über die erste Reibscheibe 8 kontaktiert werden. Liegen dabei die Kontaktbereiche 11, 13 der unterschiedlichen Reibscheiben 8, 9, hier der erste Kontaktbereich 11 und der dritte Kontaktbereich 13, in der radialen Richtung 37 weit voneinander beabstandet vor, wird eine vergleichsweise niedrige Kontaktkraft 14 durch das Federelement 10 übertragen. Liegen die Kontaktbereiche 12, 13 der unterschiedlichen Reibscheiben 8, 9, hier der zweite Kontaktbereich 12 und der dritte Kontaktbereich 13, in der radialen Richtung 37 nah beieinander, wird eine vergleichsweise hohe Kontaktkraft 14 durch das Federelement 10 übertragen.

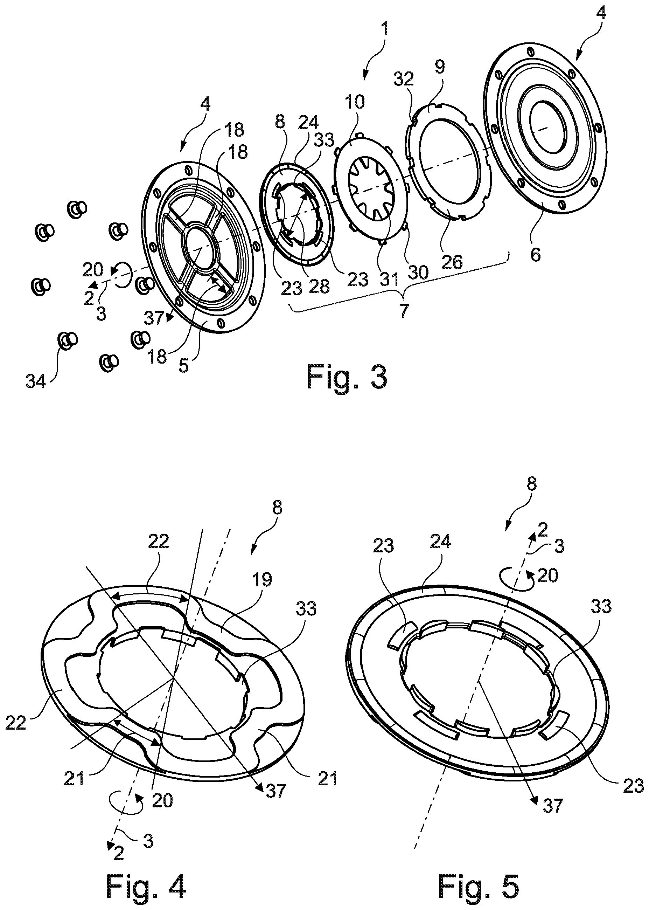

Die erste Scheibe 5 der Eingangsseite 4 weist eine Mehrzahl von in die axiale Richtung 2 weisenden ersten Kontaktzonen 18 (siehe z. B. Fig. 3) zur Kontaktierung der in der axialen Richtung 2 gegenüberliegenden ersten Reibzone 19 der ersten Reibscheibe 8 auf, wobei die ersten Kontaktzonen 18 entlang einer Umfangsrichtung 20 voneinander beabstandet angeordnet sind.

Die erste Reibzone 19 ist entlang der Umfangsrichtung 20 in voneinander unterschiedlichen Durchmesserbereichen 21, 22 angeordnet. Die erste Reibzone 19 wird durch Erhöhungen auf der ersten Reibscheibe 8 gebildet, die sich von einer sonst eben ausgeführten Oberfläche in der axialen Richtung 2 erstrecken. Die erste Reibzone 19 ist entlang der Umfangsrichtung 20 kontinuierlich ausgeführt und erstreckt sich dabei mäanderförmig über unterschiedliche Durchmesserbereiche 21, 22. Dabei erstreckt sich die erste Reibzone 19 über bestimmte Winkelbereiche nur in einem inneren ersten Durchmesserbereich 21 und über bestimmte andere Winkelbereiche nur in einem äußeren zweiten Durchmesserbereich 22.

Die erste Reibscheibe 8 weist zur Kontaktierung des ersten Kontaktbereichs 11 des Federelements 10 eine Mehrzahl von ersten inneren Kontaktelementen 23 und zur Kontaktierung des zweiten Kontaktbereichs 12 ein in der Umfangsrichtung 20 umlaufend ausgeführtes erstes äußeres Kontaktelement 24 auf.

Jedes Kontaktelement 23, 24 ist durch eine Erhebung auf der ersten Reibscheibe 8 gebildet, das sich von einer sonst eben ausgeführten Oberfläche in der axialen Richtung 2 erstreckt. Das erste innere Kontaktelement 23 erstreckt sich in der Umfangsrichtung 20 nur über einen begrenzten Winkelbereich. Diese Erhebung des ersten inneren Kontaktelements 23 ist entlang der Umfangsrichtung 20 mit einer konstanten Höhe ausgeführt. Die Erhebungen der Kontaktelemente 23, 24 sind entlang der radialen Richtung 37 kuppenförmig ausgebildet, weisen also einen kurvenförmigen Verlauf auf.

Jedes erste innere Kontaktelement 23 ist in einer festgelegten relativen Lage zur ersten Reibzone 19 angeordnet (siehe z. B. Fig. 5). Die erste Reibscheibe 8 weist eine Mehrzahl von ersten inneren Kontaktelementen 23 auf, die entlang der Umfangsrichtung 20 voneinander beabstandet angeordnet sind. Jedes erste innere Kontaktelement 23 ist entlang der axialen Richtung 2 vollständig fluchtend zur jeweiligen ersten Reibzone 19 angeordnet.

Die zweite Scheibe 6 der Eingangsseite 4 weist eine entlang einer Umfangsrichtung 20 umlaufend ausgeführte und in die axiale Richtung 2 weisende zweite Kontaktzone 25 (siehe Fig. 1 und 2) zur Kontaktierung einer in der axialen Richtung 2 gegenüberliegenden zweiten Reibzone 26 der zweiten Reibscheibe 9 auf.

Die zweite Reibscheibe 9 weist zur Kontaktierung eines dritten Kontaktbereichs 13 des Federelements 10 ein in einer Umfangsrichtung 20 umlaufend ausgeführtes zweites Kontaktelement 27 (siehe Fig. 1, 2, 9) auf.

Das zweite Kontaktelement 27 ist auf einem größten Durchmesser 28 (siehe Fig.6 bis 9) angeordnet, über den die Kontaktkraft 14 in der Reibeinrichtung 1 übertragbar ist.

Das Federelement 10 ist gegenüber einer Umfangsrichtung 20 formschlüssig mit jeder Reibscheibe 8, 9 verbunden. Das Federelement 10 weist in der radialen Richtung 37 sich nach außen erstreckende erste Zungen 30 auf, die mit ersten Ausnehmungen 32 der zweiten Reibscheibe 9 gegenüber der Umfangsrichtung 20 formschlüssig zusammenwirken. Weiter weist das Federelement 10 in der radialen Richtung 37 sich nach innen erstreckende zweite 31 Zungen auf, die mit zweiten Ausnehmungen 33 der ersten Reibscheibe 8 gegenüber der Umfangsrichtung 20 formschlüssig zusammenwirken.

Die zweiten Zungen 31 wirken auch mit einer Nabe 29 (siehe Fig. 1) gegenüber der Umfangsrichtung 20 formschlüssig zusammen, so dass die Reibeinrichtung 1 über die zweiten Zungen 31 mit einer Nabe 29 drehfest verbindbar ist.

Das als Tellerfeder ausgeführte Federelement 10 weist im Kraftrand der Tellerfeder ein Verhältnis zwischen ungespannter Höhe 36 und Materialdicke 35 der Tellerfeder auf, für das gilt: 1,25 < Höhe/Materialdicke < 1,55 (siehe Fig. 7, dort nur exemplarisch dargestellt, weil Federelement 10 nicht in ungespanntem Zustand vorliegt).

In Fig. 6 bis 9 sind die unterschiedlichen Zustände der Reibeinrichtung 1 dargestellt. In dem in Fig. 6 und 7 dargestellten ersten Zustand wird die Kontaktkraft 14 über den ersten Kontaktbereich 11 und den dritten Kontaktbereich 13 übertragen. Der erste Kontaktbereich 11 liegt auf einem ersten Durchmesser 16, der dritte Kontaktbereich 13 auf einem größten (dritten) Durchmesser 28. In dem in Fig. 8 und 9 dargestellten zweiten Zustand wird die Kontaktkraft 14 über den zweiten Kontaktbereich 12 und den dritten Kontaktbereich 13 übertragen. Der zweite Kontaktbereich 12 liegt auf einem zweiten Durchmesser 17, der dritte Kontaktbereich 13 auf dem größten (dritten) Durchmesser 28. Für eine bespielhafte Reibeinrichtung 1 kann z. B. der erste Kontaktbereich 11 zwischen Federelement 10 und erster Reibscheibe 8 auf einem ersten Durchmesser 16 von z. B. 40 Millimeter liegen, während der zweite Kontaktbereich 12 zwischen Federelement 10 und erster Reibscheibe 8 auf einem zweiten Durchmesser 17 von z. B. 56 Millimeter angeordnet ist. Ein dritter Kontaktbereich 13 zwischen Federelement 10 und zweiter Reibscheibe 9 liegt dabei z. B. auf einem größten (dritten) Durchmesser 28 von 60 Millimeter.

### Bezugszeichenliste

- 1: Reibeinrichtung
- 2: axiale Richtung
- 3: Drehachse
- 4: Eingangsseite
- 5: erste Scheibe
- 6: zweite Scheibe
- 7: Ausgangsseite
- 8: erste Reibscheibe
- 9: zweite Reibscheibe
- 10: Federelement
- 11: erster Kontaktbereich
- 12: zweiter Kontaktbereich
- 13: dritter Kontaktbereich
- 14: Kontaktkraft
- 15: Verdrehwinkel
- 16: erster Durchmesser
- 17: zweiter Durchmesser
- 18: erste Kontaktzone
- 19: erste Reibzone
- 20: Umfangsrichtung
- 21: erster Durchmesserbereich
- 22: zweiter Durchmesserbereich
- 23: erstes inneres Kontaktelement
- 24: erstes äußeres Kontaktelement
- 25: zweite Kontaktzone
- 26: zweite Reibzone
- 27: zweites Kontaktelement
- 28: größter Durchmesser
- 29: Nabe
- 30: erste Zunge
- 31: zweite Zunge
- 32: erste Ausnehmung
- 33: zweite Ausnehmung
- 34: Verbindungselement
- 35: Materialstärke
- 36: Höhe
- 37: radiale Richtung

## Patentansprüche

1. Torsionsschwingungsdämpfer mit Reibeinrichtung (1), mit einer sich entlang einer axialen Richtung (2) erstreckenden Drehachse (3), wobei die Reibeinrichtung (1) eine Eingangsseite (4) mit einer ersten Scheibe (5) und einer zweiten Scheibe (6) sowie eine entlang der axialen Richtung (2) zwischen den Scheiben (5, 6) angeordnete und gegenüber der Eingangsseite (4) verdrehbare Ausgangsseite (7) mit einer ersten Reibscheibe (8) und einer zweiten Reibscheibe (9) aufweist, wobei die Ausgangsseite (7) ein Federelement (10) mit einer Mehrzahl von Kontaktbereichen (11, 12, 13) aufweist, wobei das Federelement (10) entlang der axialen Richtung (2) zwischen den Reibscheiben (8, 9) angeordnet ist und eine in der axialen Richtung (2) zumindest zwischen den Reibscheiben (8, 9) wirkende Kontaktkraft (14) über die Kontaktbereiche (11, 12, 13) übertragbar ist;
**dadurch gekennzeichnet, dass**
die Kontaktkraft (14) in Abhängigkeit von einem Verdrehwinkel (15) zwischen Eingangsseite (4) und Ausgangsseite (7) zumindest über einen ersten Kontaktbereich (11) oder einen zweiten Kontaktbereich (12) übertragbar ist, die auf voneinander unterschiedlichen Durchmessern (16, 17) angeordnet sind und die gleiche Reibscheibe (8, 9) kontaktieren.

2. Torsionsschwingungsdämpfer mit Reibeinrichtung (1) nach Anspruch 1, wobei zumindest die erste Scheibe (5) eine Mehrzahl von in die axiale Richtung (2) weisenden ersten Kontaktzonen (18) zur Kontaktierung mindestens einer in der axialen Richtung (2) gegenüberliegenden ersten Reibzone (19) der ersten Reibscheibe (8) aufweist, wobei die ersten Kontaktzonen (18) entlang einer Umfangsrichtung (20) voneinander beabstandet angeordnet sind.

3. Torsionsschwingungsdämpfer mit Reibeinrichtung (1) nach Anspruch 2, wobei die mindestens eine erste Reibzone (19) entlang der Umfangsrichtung (20) in voneinander unterschiedlichen Durchmesserbereichen (21, 22) angeordnet ist.

4. Torsionsschwingungsdämpfer mit Reibeinrichtung (1) nach Anspruch 3, wobei die erste Reibscheibe (8) zur Kontaktierung des ersten Kontaktbereichs (11) des Federelements (10) mindestens ein erstes inneres Kontaktelement (23) und zur Kontaktierung des zweiten Kontaktbereichs (12) mindestens ein erstes äußeres Kontaktelement (24) aufweist.

5. Torsionsschwingungsdämpfer mit Reibeinrichtung (1) nach Anspruch 4, wobei die erste Reibscheibe (8) zumindest eine Mehrzahl von ersten inneren Kontaktelementen (23) aufweist, die entlang der Umfangsrichtung (20) voneinander beabstandet angeordnet sind.

6. Torsionsschwingungsdämpfer mit Reibeinrichtung (1) nach Anspruch 5, wobei jedes erste innere Kontaktelement (23) entlang der axialen Richtung (2) zumindest teilweise fluchtend zur mindestens einen ersten Reibzone (19) angeordnet ist.

7. Torsionsschwingungsdämpfer mit Reibeinrichtung (1) nach einem der vorhergehenden Ansprüche, wobei die zweite Scheibe (6) eine entlang einer Umfangsrichtung (20) umlaufend ausgeführte und in die axiale Richtung (2) weisende zweite Kontaktzone (25) zur Kontaktierung einer in der axialen Richtung (2) gegenüberliegenden zweiten Reibzone (26) der zweiten Reibscheibe (9) aufweist.

8. Torsionsschwingungsdämpfer mit Reibeinrichtung (1) nach einem der vorhergehenden Ansprüche, wobei die zweite Reibscheibe (9) zur Kontaktierung eines dritten Kontaktbereichs (13) des Federelements (10) ein in einer Umfangsrichtung (20) umlaufend ausgeführtes zweites Kontaktelement (27) aufweist.

9. Torsionsschwingungsdämpfer mit Reibeinrichtung (1) nach Anspruch 8, wobei das zweite Kontaktelement (27) auf einem größten Durchmesser (28) angeordnet ist, über den die Kontaktkraft (14) in der Reibeinrichtung (1) übertragbar ist.

10. Torsionsschwingungsdämpfer mit Reibeinrichtung (1) nach einem der vorhergehenden Ansprüche, wobei das Federelement (10) gegenüber einer Umfangsrichtung (20) formschlüssig mit jeder Reibscheibe (8, 9) verbunden ist.

## Claims

1. A torsional vibration damper comprising a friction device (1), with a rotational axis (3) extending along an axial direction (2), wherein the friction device (1) has an input side (4) with a first disc (5) and a second disc (6) and an output side (7) which is arranged along the axial direction (2) between the discs (5, 6) and is rotatable relative to the input side (4) with a first friction disc (8) and a second friction disc (9), wherein the output side (7) has a spring element (10) with a plurality of contact areas (11, 12, 13), wherein the spring element (10) is arranged along the axial direction (2) between the friction discs (8, 9) and a contact force (14) acting in the axial direction (2) at least between the friction discs (8, 9) can be transmitted via the contact areas (11, 12, 13); **characterized in that** as a function of a torsional angle (15), the contact force (14) can be transmitted between the input side (4) and the output side (7) at least via a first contact area (11) or a second contact area (12), which are arranged on mutually different diameters (16, 17) and contact the same friction disc (8, 9).

2. The torsional vibration damper comprising a friction device (1) according to claim 1, wherein at least the first disc (5) has a plurality of first contact zones (18) oriented in the axial direction (2) for contacting at least one first friction zone (19), being opposite the axial direction (2), of the first friction disc (8), wherein the first contact zones (18) are arranged mutually spaced apart along a circumferential direction (20).

3. The torsional vibration damper comprising a friction device (1) according to claim 2, wherein the at least one first friction zone (19) is arranged along the circumferential direction (20) in mutually different diameter regions (21, 22).

4. The torsional vibration damper comprising a friction device (1) according to claim 3, wherein the first friction disc (8) has at least one first inner contact element (23) for contacting the first contact area (11) of the spring element (10) and at least one first outer contact element (24) for contacting the second contact area (12).

5. The torsional vibration damper comprising a friction device (1) according to claim 4, wherein the first friction disc (8) has at least a plurality of first inner contact elements (23) which are arranged mutually spaced apart along the circumferential direction (20).

6. The torsional vibration damper comprising a friction device (1) according to claim 5, wherein each first inner contact element (23) is arranged along the axial direction (2) at least partially aligned with the at least one first friction zone (19).

7. The torsional vibration damper comprising a friction device (1) according to one of the preceding claims, wherein the second disc (6) has a second contact zone (25) running along a circumferential direction (20) and pointing in the axial direction (2) for contacting a second friction zone (26), being opposite the axial direction (2), of the second friction disc (9).

8. The torsional vibration damper comprising a friction device (1) according to one of the preceding claims, wherein the second friction disc (9) has a second contact element (27) running in a circumferential direction (20) for contacting a third contact area (13) of the spring element (10).

9. The torsional vibration damper comprising a friction device (1) according to claim 8, wherein the second contact element (27) is arranged on a largest diameter (28), via which the contact force (14) in the friction device (1) can be transmitted.

10. The torsional vibration damper comprising a friction device (1) according to any one of the preceding claims, wherein the spring element (10) is form-fittingly connected to each friction disc (8, 9) with respect to a circumferential direction (20).

## Revendications

1. Amortisseur de vibrations de torsion à dispositif de friction (1), comportant un axe de rotation (3) s'étendant le long d'une direction axiale (2), dans lequel le dispositif de friction (1) présente un côté d'entrée (4) comportant un premier disque (5) et un second disque (6) et un côté de sortie (7) agencé le long de la direction axiale (2) entre les disques (5, 6) et pouvant tourner par rapport au côté d'entrée (4) comportant un premier disque de friction (8) et un second disque de friction (9), le côté de sortie (7) présentant un élément ressort (10) comportant une pluralité de zones de contact (11, 12, 13), l'élément ressort (10) étant agencé le long de la direction axiale (2) entre les disques de friction (8, 9) et une force de contact (14) agissant dans la direction axiale (2) au moins entre les disques de friction (8, 9) pouvant être transmise par l'intermédiaire des zones de contact (11, 12, 13) ; **caractérisé en ce que** la force de contact (14) peut être transmise entre le côté d'entrée (4) et le côté de sortie (7) en fonction d'un angle de rotation (15) au moins par l'intermédiaire d'une première zone de contact (11) ou d'une seconde zone de contact (12), qui sont agencées sur des diamètres différents (16, 17) l'un de l'autre et viennent en contact avec le même disque de friction (8, 9).

2. Amortisseur de vibrations de torsion à dispositif de friction (1) selon la revendication 1, dans lequel au moins le premier disque (5) présente une pluralité de premières zones de contact (18) orientées dans la direction axiale (2) pour venir en contact avec au moins une première zone de friction (19) opposée dans la direction axiale (2) du premier disque de friction (8), les premières zones de contact (18) étant agencées espacées les unes des autres le long d'une direction circonférentielle (20).

3. Amortisseur de vibrations de torsion à dispositif de friction (1) selon la revendication 2, dans lequel l'au moins une première zone de friction (19) est agencée le long de la direction circonférentielle (20) dans des zones de diamètre (21, 22) différentes les unes des autres.

4. Amortisseur de vibrations de torsion à dispositif de friction (1) selon la revendication 3, dans lequel le premier disque de friction (8) présente au moins un premier élément de contact interne (23) pour venir en contact avec la première zone de contact (11) de l'élément ressort (10) et au moins un premier élément de contact externe (24) pour venir en contact avec la seconde zone de contact (12).

5. Amortisseur de vibrations de torsion à dispositif de friction (1) selon la revendication 4, dans lequel le premier disque de friction (8) présente au moins une pluralité de premiers éléments de contact internes (23) qui sont agencés espacés les uns des autres le long de la direction circonférentielle (20).

6. Amortisseur de vibrations de torsion à dispositif de friction (1) selon la revendication 5, dans lequel chaque premier élément de contact interne (23) est agencé au moins partiellement affleurant avec l'au moins une première zone de friction (19) le long de la direction axiale (2).

7. Amortisseur de vibrations de torsion à dispositif de friction (1) selon l'une quelconque des revendications précédentes, dans lequel le second disque (6) présente une seconde zone de contact (25) réalisée de manière continue le long d'une direction circonférentielle (20) et orientée dans la direction axiale (2). pour venir en contact avec une seconde zone de friction (26) du second disque de friction (9) opposée dans la direction axiale (2).

8. Amortisseur de vibrations de torsion à dispositif de friction (1) selon l'une quelconque des revendications précédentes, dans lequel le second disque de friction (9) présente un second élément de contact (27) réalisé de manière continue le long d'une direction circonférentielle (20) pour venir en contact avec une troisième zone de contact (13) de l'élément ressort (10).

9. Amortisseur de vibrations de torsion à dispositif de friction (1) selon la revendication 8, dans lequel le second élément de contact (27) est agencé sur un plus grand diamètre (28) par l'intermédiaire duquel la force de contact (14) peut être transmise dans le dispositif de friction (1).

10. Amortisseur de vibrations de torsion à dispositif de friction (1) selon l'une quelconque des revendications précédentes, dans lequel l'élément ressort (10) est relié par complémentarité de forme à chaque disque de friction (8, 9) par rapport à une direction circonférentielle (20).
